(19) Europäisches Patentamt
European Patent Office
Office européen des brevets

(11) Publication number: 0 362 853 A2

# (12) EUROPEAN PATENT APPLICATION

(21) Application number: 89118520.9

(51) Int. Cl.[5]: C08G 59/62

(22) Date of filing: 05.10.89

(30) Priority: 06.10.88 US 254046

(43) Date of publication of application:
11.04.90 Bulletin 90/15

(84) Designated Contracting States:
BE CH DE FR GB LI

(71) Applicant: JAMES RIVER-GRAPHICS, INC.
28 Gaylord Street
South Hadley, MA 01075(US)

(72) Inventor: Bennett, Everett W.
210 Park Street
Easthampton Massachusetts 01027(US)

(74) Representative: Kraus, Walter, Dr. et al
Patentanwälte Kraus, Weisert & Partner
Thomas-Wimmer-Ring 15
D-8000 München 22(DE)

## (54) Phenoxy resins suitable for vesicular imaging and process for their synthesis.

(57) The present invention relates to phenoxy resins suitable for vesicular films and to processes for synthesizing such resins. In a first aspect, the invention relates to a Methyl Cellosolve-free "process branched" vesicular phenoxy resin which is coatable, highly branched, ungelled, non-linear, branched at hydroxy groups derived from a difunctional epoxide, and having a molar ratio of monomeric units derived from a difunctional epoxide: monomeric units derived from a dihydric phenol of greater than or equal to 1. In a second aspect, the invention relates to a Methyl Cellosolve-free hybrid chemically branched process branched vesicular phenoxy resin which is highly coatable, highly branched, ungelled, non-linear and branched at (1) hydroxy groups derived from a difunctional epoxide and (2) epoxide or hydroxy functional groups derived from a branching agent having three or more functional groups.

EP 0 362 853 A2

## BACKGROUND OF THE INVENTION

The present invention relates to phenoxy resins and, more particularly, to improved phenoxy resins suitable for vesicular imaging as well as a method for their preparation.

Vesicular images are formed on a photographic film by refraction of light from small bubbles or vesicles of gas which are formed and trapped in those areas of the film exposed to light and thereafter developed. The film has a resinous coating which carries a light-sensitive vesiculating agent, which coating is deposited on a photographic grade film or substrate. The light-sensitive vesiculating agent is generally referred to as a sensitizer, with the most commonly employed sensitizers being diazo-compounds which, upon exposure to light, generate nitrogen gas. The gas does not form vesicles immediately but does so upon thermal development of the film, thereby allowing the microdispersed gaseous material to coalesce and form the bubbles. The resulting vesicles or bubbles in the exposed area make the matrix opaque to the transmission of light in such areas.

Successful vesicular imaging, regardless of the gas used to develop the bubbles in the matrix polymer, e.g., oxygen, isobutylene, carbon dioxide or nitrogen, has a fundamental physical requirement relating the critical minimum bubble radius to the gas pressure available to supply the work needed to expand the vesicle from the incipient vesicle site or nucleation center. The gas pressure available from the imagewise photolysis of the gas progenitor and the vesicle formation dynamics depend upon a complex interplay between the polymer matrix characteristics, i.e., gas solubility in the matrix, nucleation sites, matrix flow properties and gas barrier properties. Thus, the matrix or vehicle in which the sensitizer or vesiculating agent is dispersed and within which the vesicles are formed upon exposure and development, is one of the essential components influencing the performance of a vesicular film. It is generally accepted that the barrier properties dominate the choice of optimum vesicular imaging matrix polymers since in the absence of good gas barrier properties, none of the other requirements, either alone or in combination, is sufficient to afford a useful vesicular imaging film.

Commercial interest in the advantages of the "dry" development process employed with vesicular films has led to intense research in this area of technology. As a result of such research, a few classes of polymers with adequate gas barrier properties have been identified; e.g., Saran , poly-(alphachloroacrylonitrile), polymethacrylonitrile and various co- and terpolymers of the latter two monomers. The excellent barrier properties of certain linear, i.e., unbranched and uncrosslinked, phenoxy resins toward gases and moisture vapor have led to their use as vehicles for relatively low speed diazo vesicular imaging film in U.S. Patent No. 3,622,333. In similar fashion, Novolac branched phenoxy resins have also been employed as matrix resins. In U.S. Patent No. 4,301,524, for example, there is disclosed a lightsensitive vesicular imaging composition comprising a Novolac branched epoxy resin of a bis-glycidyl ether and a dihydric phenol.

Problems such as gelation during polymerization, which rendered the synthesis of branched epoxy resins expensive and difficult to achieve, led to the development in U.S. Patent No. 4,451,550 of a coatable, highly long-chain branched, ungelled, non-linear phenoxy resin of random structure, which is devoid of regularly recurring units and which has an average distance between the branch sites of essentially the same order of magnitude as the average branch length. Such resins are most preferably endblocked, and advantageously comprise the reaction product of:

(i) at least one dihydric phenol,

(ii) an epoxy comonomer having two epoxy functional groups,

(iii) a branching agent comprising an epoxy or phenolic compound having a functionality greater than 2, and preferably at least 3. The amount of branching agent employed is sufficient to provide at least 10, and preferably at least 15 to 20, mole percent branch sites in the polymer resin. The composition most preferably further includes:

(iv) a monofunctional phenol or epoxide as an endblocker compound in an amount sufficient to preclude gelation of the phenoxy resin during the polymerization reaction and to concurrently determine the average molecular weight.

The vesicular films of U.S. Patent No. 4,451,550 are preferably prepared by first formulating the resin vehicle and the materials to be disposed therein, such as the vesiculating agent, in a suitable solvent such as Methyl Cellosolve alone or in admixture with acetone, methyl ethyl ketone, tetrahydrofuran, chlorinated solvents such as ethylene dichloride, and toluene. The most preferred solvent is Methyl Cellosolve.

The highly long-chain branched, ungelled nonlinear phenoxy resins of U.S. Patent No. 4,451,550 are

produced in the Methyl Cellosolve solvent by a process known as "chemical branching." Such chemically branched phenoxy resins are produced by reacting (i) dihydric phenol, (ii) epoxy comonomer having two epoxy functional groups and (iii) a branching agent. The chemically branched phenoxy polymer resins can easily be driven to a degree of polymerization affording a much higher solution viscosity than generally attainable with the corresponding linear resin obtained by simply reacting the dihydric phenol and epoxy compound. These higher viscosity solutions have appreciable elastic behavior and can be well suited for some precision coating techniques, i.e., they can have a viscosity of at least 2,500 centipoise, more preferably from 4,000 to 17,000 centipoise and most preferably from 5,000 to 12,000 centipoise at 30 weight percent solids.

While providing the advantages of a highly viscous solution, the non-linear phenoxy resins yet also can provide the same properties exhibited by the linear phenoxy resins, if not better. Indeed, non-linear phenoxy resins of low viscosity, e.g., up to 500 centipoise at 30 weight percent solids, can provide a vesicular film exhibiting increased film speed as compared to a commercially available linear analogue, i.e., Xidex SX film.

By virtue of forming a highly branched phenoxy resin as described above, the melt viscosity of the resulting resin is reduced as compared to an unbranched phenoxy resin of identical molecular weight. Phenoxy resins of lower melt viscosities, in turn, give rise to improved vesicular films since larger bubbles can be formed in the film during the limited period of time in which the films are processed.

Up to now, little attention has been given to the particular solvent medium employed for producing the above-described chemically branched phenoxy resins. Typically, Methyl Cellosolve was employed. However, since Methyl Cellosolve is toxic, it would clearly be advantageous if a non-toxic alternative to Methyl Cellosolve could be found. This is especially important in light of the fact that it is virtually impossible to remove residual levels of Methyl Cellosolve from the final product.

## SUMMARY AND OBJECTS OF THE INVENTION

The present inventor has found that it is possible not only to eliminate toxic Methyl Cellosolve as a solvent but also, through appropriate selection of the alternative solvent medium, to manipulate both the type of branching and the degree of branching of the polymer depending on the particular properties desired for the final product. More particularly, it is a primary objective of the present invention to provide novel Methyl-Cellosolve-free phenoxy resins which, by virtue of appropriate selection of the solvent medium, are "process-branched" or hybrid process/chemically branched.

It is a further object of the present invention to provide novel, highly branched Methyl Cellosolve-free phenoxy resins exhibiting low melt viscosities and barrier properties in a film suitable for vesicular imaging which are as good, or even better than the barrier properties of chemically branched phenoxy resins.

Yet another object of the present invention is to provide novel, highly branched Methyl Cellosolve-free phenoxy resins which can be branched in the absence of the expensive trifunctional epoxide branching agents used to produce chemically branched phenoxy resins.

In a first embodiment, the present invention relates to a Methyl Cellosolve-free process branched phenoxy resin suitable for vesicular imaging which is coatable, highly branched, ungelled; non-linear, and branched at hydroxy groups derived from a difunctional epoxide and wherein the molar ratio of monomeric units derived from the difunctional epoxide to monomer units derived from dihydric phenols is greater than or equal to 1.

In a preferred aspect of the first embodiment, the present invention relates to a Methyl Cellosolve-free process branched phenoxy resin suitable for vesicular imaging comprising a copolymer of the formula:

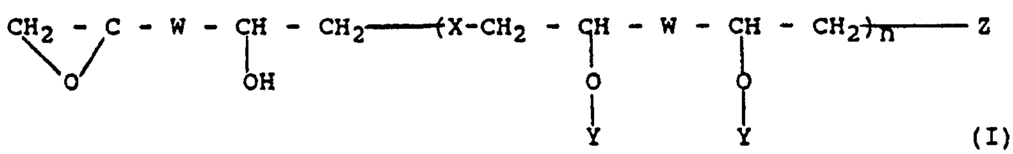

(I)

wherein:

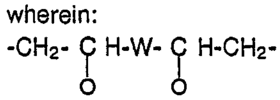

is the residue of an epoxy comonomer having two epoxy functional groups;
-X- is the residue of a dihydric phenol; -Y is hydrogen or a phenoxy unit of the formula (I); -Z is a terminal dihydric phenol or a dihydric phenol bonded to a terminal epoxy monomer; and
n is a number such that the resin has a molecular weight rendering it suitable for vesicular imaging.

In a second embodiment, the present invention relates to a Methyl-Cellosolve free hybrid process branched/chemically branched vesicular phenoxy resin which is highly coatable, highly branched, ungelled, non-linear, branched at (1) hydroxy groups derived from a difunctional epoxide and (2) epoxide or hydroxy functional groups derived from a branching agent having three or more functional groups.

In yet another aspect, the present invention relates to a process for producing a process branched phenoxy resin for vesicular films comprising:

(i) dissolving a dihydric phenol, an epoxy comonomer having two epoxy functional groups, and a catalyst in a solvent which:

(A) is capable of dissolving the polymer;

(B) is chemically compatible with the catalyst;

(C) is less reactive with said epoxy functional groups than hydroxyl moieties of the polymer; the ratio of said epoxy comonomer to said dihydric phenol being greater than or equal to 1;

(ii) polymerizing the dihydric phenol and the epoxy comonomer having two epoxy functional groups until the polymer builds up to a viscosity corresponding to a rheology suitable for coating.

With the foregoing and other objects, advantages and features of the invention that will become apparent hereinafter, the nature of the invention may be more clearly understood by reference to the following detailed description of the preferred embodiments of the invention and to the appended claims.

## DETAILED DESCRIPTION OF PREFERRED EMBODIMENTS

The phenoxy resins produced in accordance with the present invention are highly long chain branched phenoxy resins adapted as matrices for enhanced film speed vesicular films. As previously indicated, the resins are advantageously produced in the absence of toxic Methyl Cellosolve solvent and may be either process branched or hybrid process/chemically branched.

### (A) Phenoxy Resins Produced By Process Branching

The process branched phenoxy resins advantageously comprise the reaction product of

(i) at least one dihydric phenol;

(ii) an epoxy comonomer having two epoxy functional groups; and

(iii) optionally an endblocker (as is used in production of phenoxy resins which are chemically branched).

As used herein, the "functionality" of a compound refers to the number of epoxy or hydroxy functional groups of that particular compound. Hence, for example, a monofunctional phenol or epoxide refers to a compound having a single epoxy or hydroxy functional group, irrespective of the presence of other inert functional groups. Indeed, the presence of other functional groups inert in the copolymerization reaction is contemplated, e.g., as in 2,4,6-trichlorophenol, which is useful as a monofunctional phenolic endblocker compound.

The dihydric phenol employed in the preparation of the non-linear phenoxy resins can generally be selected from dihydroxy benzenes and compounds of the formula:

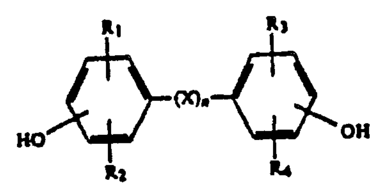

wherein $R_1$, $R_2$, $R_3$, $R_4$ are hydrogen, halogen or lower alkyl; n is an integer from 0-1, and when n is 1, X is $-CH_2-$ ; $-C(CH_3)_2-$ ; $-CH(CH_3)-$;

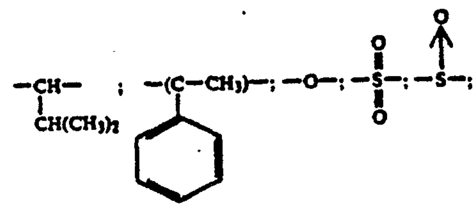

or -S-. Mixtures of dihydric phenols can also be used.

Examples of suitable dihydric phenols include, but are not limited, to sulfonyl diphenol, bisphenol-A, bisphenol-F and resorcinol. Mixtures of such dihydric phenols may also be suitably employed.

Sulfonyl diphenol is the most preferred dihydric phenol reactant and preferably comprises at least 50 mole percent of the dihydric phenol reactant. An exemplary mixture which can be employed includes a 50/50 molar mixture of sulfonyl diphenol and resorcinol.

The dihydric phenols are reacted with one or more epoxy comonomers having two epoxy functional groups. Examples of suitable diepoxides include the diglycidyl ether of resorcinol, the diglycidyl ether of bisphenol-A, the diglycidyl ether of hydroquinone, the diglycidyl ether of sulfonyl diphenol, etc. and mixtures thereof. Resorcinol diglycidyl ether is the most preferred diepoxide, but mixtures containing, for example, 25 mole percent of the diglycidyl ether of bisphenol-A can be used.

In general, any of the conventionally known dihydric phenols and epoxy compounds useful in preparing phenoxy resins may be employed so long as a polymer having suitable properties for use as a vehicle in a vesicular film is obtained. The dihydric phenol and epoxy reactants which are most useful are those which provide a polymer having a glass transition temperature above room temperature and preferably in the region used for development in commercial vesicular processes, i.e., around 100° to 160° C. Examples of dihydric phenol/diepoxide polymers affording such glass transition temperatures are tabulated in New Linear Polymers by Henry Lee, Donald Stoffey, and Chris Neville, published by McGraw Hill, 1967, pages 45 and 46 thereof. Those dihydric phenol and epoxy compounds which react to provide polymers exhibiting the better gas barrier properties, of course, are preferable.

In order to obtain branching according to the prior art, a trifunctional epoxide or a phenol such as a Novolac as well as an endblocker were combined with the dihydric phenol and epoxy comonomer having two epoxy functional groups. Thus, "chemical" branching occurred by virtue of the reaction of the dihydric phenol with one or more of the free epoxy groups of the trifunctional epoxide branching agent. Such a process was typically carried out in Methyl Cellosolve solvent since Methyl Cellosolve was one of the few solvents satisfying a number of important criteria necessary for successful chemical branching. More specifically, the solvent employed in the above-described production of chemically branched phenoxy resins had to (i) be capable of dissolving the polymer, (ii) have a boiling point above that necessary to allow the polymerization to occur, i.e., 90° C, (iii) not interfere with the polymerization, and (iv) be compatible with the alkaline polymerization catalyst typically employed in the reaction. Although meeting the above criteria (i)-(iv), Methyl Cellosolve is highly toxic. Additionally, it is virtually impossible to remove residual amounts of Methyl Cellosolve from the polymeric product.

According to the present invention, it has surprisingly been found that a highly branched phenoxy resin suitable for vesicular films can be produced in the absence of Methyl Cellosolve solvent and in the absence of expensive trifunctional epoxide branching agents. More particularly, it has surprisingly been found that by an appropriate choice of the solvent medium, a phenoxy resin can be prepared by process branching rather than chemical branching and that such process branched resins are as good as, or in some instances actually superior to chemically branched resins as vesicular films.

Before discussing the specific process for producing a process branched phenoxy resin, a brief discussion of what "process branching" is and how it differs from "chemical branching" is in order. To understand how process branching occurs during the copolymerization of a dihydric phenol and an epoxide, the basic polymer forming analog was studied, namely, the reaction between 4,4′-dihydroxydiphenylsulfone (SDP) and the monofunctional phenylglycidyl ether.

Model Reaction:

A. Total Synthesis

(4)

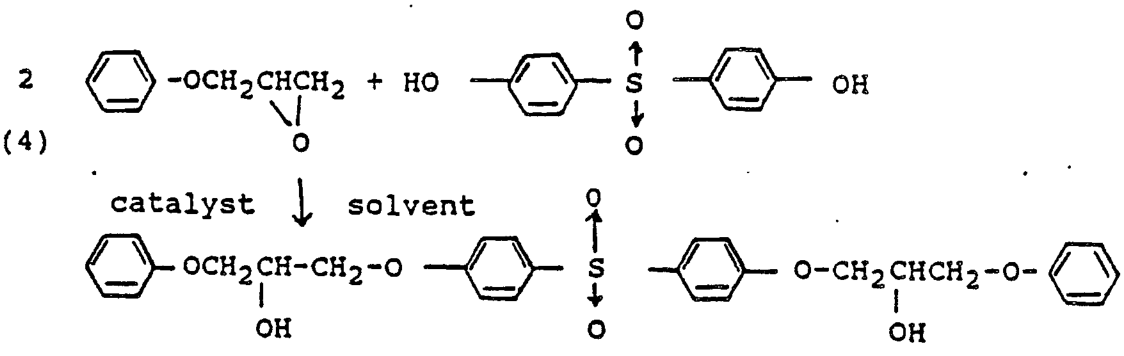


(I)

B. Branching Step

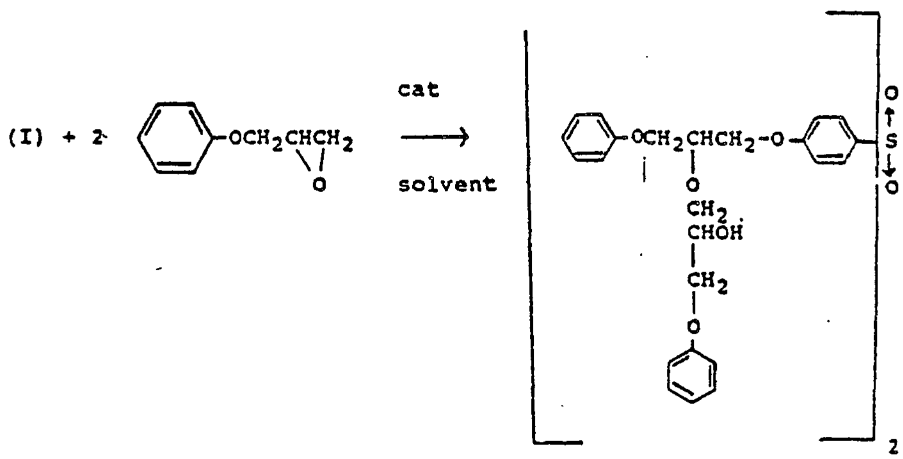


It can be seen that in process branching, branching occurs at the alcohol sites on the polymer chain rather than at sites derived from a separate trifunctional epoxide (which is what occurs in chemical branching).

As previously indicated, the branching of the phenoxy resin polymer is manipulated through the choice of the solvent medium. In order to obtain process branching, it is necessary for free epoxide groups present as terminal groups on a polymer chain to react with the secondary alcohol groups in the formula (I) above. In this regard, primary alcohols such as Methyl Cellosolve are more acidic than are the secondary alcoholic groups formed along the phenoxy chain. Accordingly, in such solvent systems, the epoxy groups will preferentially react with the hydroxy groups of the solvent rather than with the hydroxy groups of the polymer and little or no process branching will be observed. In any event, it is generally considered desirable, where possible, to avoid the use of a primary alcohol solvent. Thus, to promote process branching, secondary or tertiary alcohols, which will not react to the exclusion of the alcohol sites on the phenoxy chain for available epoxy groups, are preferred.

In addition to using a secondary or tertiary alcoholic solvent with or without a non-hydroxylic cosolvent such as dioxane or 1,3-dioxolane rather than a primary alcoholic solvent, process branching is further promoted by employing an excess of diepoxide relative to dihydric phenol. More specifically, the catalyst employed in the polymerization interacts with the dihydric phenol in preference to the alcohol on the phenoxy resin chain. Accordingly, process branching occurs only after the concentration of phenol drops below that of the catalyst, thereby enabling interaction of the catalyst with the alcohol groups of the polymeric chain. The extent to which excess epoxide is used further determines the structure of the final process branched product.

Thus, by appropriate control of the solvent medium, it is possible to produce a phenoxy resin by process rather than by chemical branching thereby eliminating the need for trifunctional epoxide. The

process branched phenoxy resins need only have an extent of branching of about 9-11% to exhibit properties similar to chemically branched resins including 17% trifunctional epoxide branching agent. This occurs because, when the trifunctional epoxide is employed as the branching agent, the trifunctional units copolymerize into the polymer architecture throughout the course of the polymerization reaction. Consequently, many cyclic structures form which is tantamount to wasting trifunctionality. In contrast to chemical branching, process branching occurs only at the end of the process and hence, since the growing chain ends are far removed, do not form a significant amount of cyclics.

To obtain a process branched phenoxy resin suitable as a vesicular film, the dihydric phenol and the epoxy comonomer having two epoxy functional groups are dissolved, along with a suitable catalyst, in a solvent. The solvent is one which is capable of dissolving the polymer produced, facilitates process branching, and does not otherwise interfere with the polymerization reaction, e.g., is compatible with the catalyst. As previously indicated, secondary and tertiary alcohols, alone or for solubility reasons in conjunction with aprotic solvents like dioxane or dioxolane, generally satisfy the above criteria since the hydroxy groups thereon have acidities which are less than or equal to the acidities of the hydroxy moieties on the polymeric chain and thus, do not compete with the polymeric hydroxy groups for the available epoxy groups. In this way, process branching is promoted. A specific secondary alcohol which is suitable is Dowanol PM, which may be used in combination with dioxolane or dioxane in a 100:0 to 0:100 molar ratio and preferably a 60:40 molar ratio for reasons of reaction temperature, time, cost, and polymer solubility. The preferred Dowanol: dioxolane ratio depends upon both the polymer compatability and the boiling point attainable relative to the required polymerization temperature of circa 90°C or higher.

The catalysts are selected from those known to promote reaction of an epoxide with a dihydric phenol. Included among such well-known catalysts are tetrabutylammonium hydroxide or potassium hydroxide.

Enough solvent should be employed such that the solution remains workable but not so much that the kettle yields become undesirably low. This amount is readily ascertained by persons skilled in the art. In the case of a 1:1 Dowanol-PM/dioxalane solvent, this amount corresponds to about a 25- 30% solids level since with more dioxolane the catalyst intermediate takes too long to dissolve. The reaction of the starting materials is then allowed to proceed at a temperature ranging from about 90 to 110°C and preferably 100 to 105°C, the lower limit being the temperature at which the reaction is facile and the upper limit being the temperature at which solvent refluxes.

The polymerization reaction continues at the 30% solids level, for example, until the polymer builds up to a molecular weight bordering on incompatibility. Because incompatibility of the system, which renders the system unworkable, might occur before the desired molecular weight of the phenoxy resin reaches that necessary to afford the desired coating rheology, it may be necessary to add additional dioxolane to cut the solids level down to about 25%. The polymerization of the phenoxy resin can then be continued until the desired molecular weight range is reached. In this regard, phenoxy resin molecular weights providing viscosities between about 900 to 1200 cp (25% solids at 25°C) have been observed to provide both desirable film properties and the right rheology for coating. In general, the polymerization is carried out until the polymer is at a molecular weight such that the coating is tack-free, non-blocking, of acceptable flexibility, and not liable to cracking. Such properties generally correspond to a molecular weight between about 10,000 and 2,000,000 and preferably between about 20,000 and 1,000,000.

It should be noted that the degree of process branching can be manipulated by the choice of the solvent system as well as by the ratio of dihydric phenol to epoxide. Thus, as the molar ratio of epoxide groups to phenol groups increases from a value of about 1, the amount of process branching is correspondingly increased. The relative amounts of epoxide groups and phenol groups also determines the "fundamental branch length" of the phenoxy resin. This provides an important tool in the preparation of a diazo vesicular film since it is the degree of branching which determines the melt viscosity as well as other properties of the final film product. Generally, with a purely process branched phenoxy resin, a degree of branching between 5 and 20% and preferably between 7 abd 15% is highly desirable.

The following examples are presented to illustrate preparation of process branched phenoxy resins in accordance with the present invention:

Example 1: Preparation of a Process Branched Phenoxy Resin:

Phenoxy resins were prepared in a Dowanol-PM/1,4-dioxane solvent by charging into a two liter kettle;
153.55g of Heloxy WC-69 diglycidyl ether of resorcinol (available from Wilmington Chemical Co.) as epoxy comonomer having two epoxy functional groups;
32.38g of resorcinol as a dihydric phenol;

63.11g of 4,4-sulfonyl di-phenol as a second dihydric phenol;
As catalyst, there was employed 15.58g of mono-tetra-butyl ammonium sulfonyl diphenol-sulfonyl diphenol intermediate.

The above ingredients were combined with enough solvent to provide a solids content of 30% by weight; The solvent employed included:
363.35g (60% by weight) Dowanol-PM
211.95g (35% by weight) 1,4-dioxane acid quench solution including:
(i) 30.28g of THFA
(tetrahydrofurfurylalcohol); 5% by weight); and
(ii) 2.42g of 85% phosphoric acid as quenching acid

The reaction proceeded as follows:

| Time (min) | Temp. (°C) | Conditions |
|---|---|---|
| 0 | 92 | reactants dissolving |
| 8 | 113 | clear |
| 105 | 115 | slight viscosity increase observed |
| 270 | 115 | still clear but viscosity getting high |
| 290 | 115 | mixture quenched, clear, pale apricot color |

At room temperature, the Brookfield viscosity of the final product was 6,075 cp. [Measured same way as comparative Example 1]

Quite clearly, had the quenching operation not been performed, the reactor contents would have gelled. This demonstrates that even though there was no trifunctional branching agent present among the reactants, extensive branching, attributable to process branching, occurred. Similar reactions deliberately not quenched did, in fact, gel. This proves unequivocally that branching and, consequently, crosslinking occurred.

Comparative Example 1:

The following experiment demonstrates that the type of branching which occurs can be controlled by appropriate choice of the solvent medium.

The exact same reactant recipe was employed as in Example 1 except that the Dowanol-PM/dioxane solvent was replaced with the same amount of Methyl Cellosolve to provide a system having a 30% solids content after quenching. The results are as follows:

| Time (min) | Temp (°C) | Conditions |
|---|---|---|
| 0 | heating started | catalyst is suspended |
| 10 | 80 | solution is clear |
| 15 | 100 | solution is clear |
| 20 | 110 | solution is clear |
| 27 | 115 | solution is clear |
| 285 | 115 | small viscosity increase observed, but still clear |
| 385 | 115 | still clear, little further viscosity change |
| 465 | 115 | solution quenched, still no significant viscosity increase |

At room temperature, the quenched reaction product had a Brookfield viscosity of 390 cp at 30% solids using spindle #2 at 30 r.p.m., f = 10X, r = 39.

From the above data, it is clear that even though the reaction in Methyl Cellosolve was allowed to proceed for three more hours than the same reaction in Dowanol-PM/dioxane, no significant branching, in

the absence of a trifunctional branching agent, was observed in the Methyl Cellosolve system.

Comparative Example 2:

The following experiment illustrates that, in addition to the selection of an appropriate solvent medium, process branching is further dependent on the presence of free epoxy end groups.

Once again, the exact same reactant recipe was employed as in Example 1 except that there was further included in the recipe 8.84g of p-tert-butyl phenol endblocker, which is the precise amount needed to consume the epoxy end groups required for process branching to occur. The results are as follows:

| Time (min) | Temp. (°C) | Conditions |
|---|---|---|
| 0 | heating started | catalyst is undissolved |
| 11 | 90 | still have suspension |
| 17 | 105 | solution is clear |
| 23 | 110 | solution is clear |
| 40 | 115 | solution is clear |
| 66 | 118 | solution is clear |
| 203 | 115 | solution is clear |
| 493 | 115 | still clear, low viscosity, quenched |

At room temperature,the quenched reaction product had a Brookfield viscosity of 625 cp at 30% solids using spindle #2 at 30 r.p.m., f = 10x, r = 62.5.

Thus, by endblocking the epoxy end groups, process branching does not occur even when using Dowanol PM as the solvent. These experiments clearly indicate that it is feasible with process branching, just as with chemical branching, to use an endblocker to control gelling propensity.

(ii) Hybrid phenoxy resins produced by process branching and chemical branching

As previously discussed, hybrid phenoxy resins produced by both process and chemical branching may be employed in vesicular films. When compared to chemically branched resins, the resins are advantageous in terms of their improved gas barrier properties. However, as compared to purely process branched resins, the hybrid resins exhibit a more rapid rheological response.

To prepare the hybrid resins, there are required, in addition to the dihydric phenol and the epoxy comonomer having two epoxy functional groups, a branching agent as well as an endblocker.

Examples of suitable hydroxy branching agents include phloroglucinol, which being trihydroxylic is trifunctional insofar as the polymerization is concerned. Other suitable hydroxy branching agents include 1,3,8-trihydroxynaphthalene; 2,4,4′-trihydroxydiphenyl; 2,4,4′- trihydroxydiphenylether; 2,4,4′-trihydroxydiphenylmethane; and diresorcyl sulfide.

Preferred epoxy branching agents include the multifunctional glycidyl ethers such as tri- and tetrafunctional glycidyl ethers. Epoxy novolac resins may also be employed, such as those having an average functionality of about 3.6, e.g., an epoxy Novolac available from Dow Chemical Co. under the designation DEN-438.

The most preferred epoxy branching agents, however, and indeed the most preferred branching agent employable in accordance with the present invention, are the trifunctional epoxides. A specific example of such trifunctional epoxides which has been found to be most suitable for the purposes of the present invention is triglycidyl p-aminophenol for it has been discovered that though resins of branched structure can indeed be made using either a Novolac resin or a polyglycidyl ether of a Novolac resin as the branching agent in the presence of either a monofunctional glycidyl ether or phenol as endblocker, resins made via an equivalent amount of a trifunctional branching structure, especially an N-glycidyl branching agent such as triglycidyl p-aminophenol, have better rheological properties and are far less prone to develop undesired microgel particles than recipes employing the Novolac materials which contain tetra and pentafunctional components as part of the unavoidable distribution of functionalities in the Novolac. Substitution, for example, of a Novolac glycidyl ether branching agent for a triglycidyl ether of p-aminophenol branching agent in an endblocked resin recipe in accordance with the present invention generally results in the formation of undesired microgel particles.

The dihydric phenol, epoxy compound and branching agent are most preferably reacted cojointly in the presence of an endblocker compound, which is a monofunctional phenol or epoxide. In general, any monofunctional phenol or epoxide can be employed, with those being non-volatile, available in high purity and readily available being most preferred for practical reasons.

The use of an endblocker is most preferred in that it allows the reaction to be run essentially to completion without fear of gelation, and further allows one to skew the molecular weight distribution in a controlled, reproducible and useful manner. The procedures of partial catalyst neutralization and solvent dilution, e.g., as taught in the U.S. Patent No. 4,302,524, are simply measures to cope with the very rapid increase in viscosity of a non-endblocked recipe as the gel point is approached. Such methods not only prolong the reaction time but also decrease the kettle yield, which are both undesirable consequences. The use of an endblocker, however, allows one to avoid such undesirable consequences.

It is preferred that the endblocker compound, when a phenol, have a pKa within about 1 of the dihydric phenol employed as a co-reactant, for a correspondence in reaction rate and greater control over both gelation and molecular weight distribution can accordingly be realized. When a mixture of dihydric phenols is used, the endblocker effect depends on which pKa of the various dihydric phenols is approximated. The phenolic endblocker compound need only have a pKa within about 1 of any of the dihydric phenols in the mixture comprising the dihydric phenol reactant.

For example, when reacting sulfonyl diphenol with an epoxy compound and a branching agent in the presence of resorcinol or bisphenol A as a second dihydric phenol, it is preferred to employ 4-t-butylphenol as an endblocker due to its similarity in pKa to that exhibited by resorcinol or bisphenol A, e.g., in a 50/50 mixture of sulfonyl diphenol and resorcinol. In such a case, it has been found that the reaction surprisingly occurs at a very fast rate and yet control over the gelation is exceedingly effective.

Glycidyl ethers may also be readily employed as endblockers in the present invention and their use is devoid of any considerations of pKa. Accordingly, all epoxy endblockers work equally well no matter what the initial reactants are. Examples of suitable epoxy endblockers include glycidyl ethers such as n-butylglycidylether 4-t-butylphenol glycidyl ether, phenylglycidyl ether, and glycidyl methacrylate.

Obviously mixtures of both types of endblockers, i.e., phenol and epoxy endblockers, can be employed and are also contemplated.

As in the case with a hydroxy endblocker such as 4-t-butylphenol, if a sufficient amount of epoxy endblocker is employed, gelation of the phenoxy resin is precluded. Thus, one has the ability of controlling and reproducing the degree of polymerization of the phenoxy resin and the final solution viscosity without fear of gelation upon using the appropriate amount of endblocker, as gelation is precluded.

To prepare the hybrid process/chemically branched phenoxy resins, the basic synthetic route employed in the chemical branching process is followed except that use of the primary alcoholic solvent is avoided, i.e., process branching is superimposed on the chemical branching polymerization process especially if a slight (1-2%) excess of epoxide is used.

As was the case with the process branched phenoxy resins, the hybrid process branched/chemically branched resins are advantageously produced in a Methyl Cellosolve-free system. However, because of the increased branching which occurs in the solvent system of the invention versus the Methyl Cellosolve type system (due to the occurrence of both chemical and process branching), the gel point will be approached much more rapidly in the present solvent system than it would be in a Methyl Cellosolve system. More specifically, when Methyl Cellosolve was employed as the solvent, the amount of epoxy or phenolic branching agent employed was generally that amount sufficient to provide at least 10 mole percent branch sites in the polymer resin, thereby insuring that the phenoxy resin was not a linear resin but a highly branched resin. The percentage of branch sites is defined as that amount of difunctional reactant of a given chemical genus, i.e., either epoxide or phenol, replaced by branching molecules, i.e., branching agent, in the polymer chain. Most preferably, the branching agent was employed in an amount sufficient to provide from about 15 to 20 mole percent branched sites in the polymer resin.

Due to the occurrence of both chemical and process branching when the reaction is carried out in the less toxic solvent system of the present invention, it may be desirable to reduce the amount of trifunctional branching agent to between about 10 and 15% and preferably to about 12.75% if polymerizing at 30% solids. The reduction in branching agent is compensated for by the process branching and enables a product to be obtained which closely resembles that prepared employing 17% branching agent when Methyl Cellosolve was the solvent. However, if polymerizing in the more dilute 25% solids solution, in order to achieve higher molecular weight, it is still possible to employ 17% chemical branching agent though the viscosity rise near the end of the reaction can be very rapid. Such adjustment enables efficient process

branching to occur without allowing it to become rampant.

Unlike with the Methyl Cellosolve solvent, the previously described alkali metal hydroxide catalysts, such as potassium hydroxide, do not dissolve in a 1:1 solvent medium of Dowanol-PM and 1,3 -dioxolane. More specifically, as the polymerization commences a phenoxide salt forms which does not dissolve in the reaction medium thereby precluding completion of the reaction within a reasonable amount of time. Such problem is overcome in accordance with the present invention by carrying out the polymerization process in two stages. In stage I, only the Dowanol-PM (and part of the 1,3-dioxolane as well as the starting materials are present and the catalyst dissolves within a relatively short period of time, i.e., 15-30 minutes. After allowing enough time for the reactive salt end groups to be coupled to the soluble polymeric species, e.g., 15-30 minutes at 90°C, the remaining 1,3-dioxolane is added to commence stage II. This is apparent from the appearance of a viscosity increase due to polymer formation. The polymerization is then allowed to run to completion, which typically requires 3 to 4 hours at 90°-98°C. Quenching agents are typically added to the reaction medium in order to terminate the reaction. Such quenching solution agents are well known in the art and include acids such as hydrochloric acid and phosphoric acid. A preferred quenching agent is a 31 to 37% aqueous HCl solution diluted with Dowanol-PM so that the water present does not precipitate resin during the quenching step.

The amount of solvent added depends on the desired solids content of the final product. Thus, if a 30% solids content is desired, 70 g of solvent would be combined with 30 g of solids. These solvent amounts should be adjusted to compensate for the amount of quenching agent and catalyst present in the system.

The above described technique, employing a novel Dowanol-PM/1,3-dioxolane solvent with reduced amounts of branching agent in two separate polymerization stages prevents the polymerization reaction from going out of control and gelling. Additionally, the approach to the quench point is comparatively slow and hence easily controlled. Such a characteristic is especially useful for achieving higher, i.e., more desirable coating viscosities at 25% solids. For example, whereas the standard process at 30% solids polymerization diluted to 25% affords a viscosity of 200-300 cp, the process according to the present invention affords a viscosity of 1200-1500 cp when run at 30% and diluted but affords a viscosity of 2100 cp when run at 25% solids.

The following examples illustrate the preparation of hybrid process branched/chemically branched phenoxy resins in the absence of a Methyl Cellosolve solvent:

Example 2

There was charged into a 5-liter reactor: 434.86g = 0.8725 mole (1.745 equiv. of epoxide) of Heloxy WC-69 diglycidyl ether of resorcinol (available from Wilmington Chemical Co.) as epoxy comonomer having two epoxy functional groups.

83.14g = 0.1275 mole (0.3825 equiv. of epoxide) of triglycidyl p-aminophenol (Ciba-Geigy 0510) as the branching agent;

256.28g = 0.5119 mole (1.0238 equiv. of phenol) of 4,4-sulfonyl di-phenol as the dihydric phenol;

112.74g = 0.5119 mole (1.0238 equiv. of phenol) of resorcinol as a second dihydric phenol; and 24.04g = 0.080 mole (0.080 equiv. of phenol) of p-tertiary butyl phenol as endblocker.

As is apparent from the above, the amount of branching agent present in the formulation was 12.75 mole percent and the phenol and epoxide components were present in stoichiometric amounts.

As a catalyst there was employed 166.5g of 25.1% tetrabutyl ammonium hydroxide in Dowanol-PM.

The reaction was carried out in two separate stages such that the total solids content in the reaction medium (after addition of both solvents) was 30% and such that the approximate weight ratio of solvents was 1:1. For stage I, there were added 1062.9g Dowanol-PM (d = 0.9). The mixture was reacted initially at 80°C and formation of a salt precipitate was observed. However, as the exothermic reaction continued for another 30 minutes and the temperature increased to 96°C, the precipitate dissolved. After another 90 minutes, 971.9g of dioxolane (stage II solvent) were added. The temperature of the reaction medium immediately dropped to 76°C. However, after 10 minutes the medium was again at a temperature of 90°C where it stayed for another 200 minutes at which point the viscosity increase required an increased stirrer speed. After another 30 minutes, the mixture was neutralized with a quenching agent comprising 18.44g of 31% aqueous hydrochloric acid and 80 ml of Dowanol-PM.

The viscosity of the polymeric product obtained above, measured at 23.0°C with a Brookfield Spindle #3 at 12 r.p.m., was 4,100 cp at 30% solids. The batch was diluted to a solids content of 25% using dioxolane. The viscosity of the 25% product was 1430 cp measured with a Brookfield Spindle #2 at 6 r.p.m.

Example 3

There was charged into a 5 liter reactor the same materials in the same amounts as were used in Example 1. The quenching agent was 18.44g of 31% aqueous HC1 diluted to 100 ml with Dowanol. The catalyst was 166.5g of 25.1% tetra-butyl ammonium hydroxide.

The reaction was run at 25% solids, i.e., using 2733.2g total solvent for 911.06g total solids. The Dowanol-PM and dioxolane were used at an approximately 1:1 weight ratio. The reaction was carried out in two stages. In stage I, the solid materials and 1241g (1366.6g-129.7g catalyst correction) Dowanol-PM were combined. The reaction medium including the catalyst was set at 90 °C under a nitrogen blanket.

After 20 minutes, the exothermic reaction raised the temperature of the reaction medium to 90 °C and salt precipitated out of solution. After an additional 15 minutes, all of the precipitate had dissolved. The reaction medium was maintained at 92-94 °C for approximately two additional hours. Next, the stage II solvent, 989.3g dioxolane (73.6g quench correction) was added through a condenser. The reaction medium immediately cooled to 68 °C but, after 25 minutes, was gently boiling at 90 °C. After two hours, the reaction medium was becoming more viscous and was somewhat hazy. After an additional 10 minutes while at a temperature of 89.5 °C, the reaction medium was quenched.

The resulting polymer had a Brookfield viscosity of 2105 CP with a #2 spindle at 6 r.p.m. The color of the resulting product was light and there was no sign of gel on the kettle wall.

Comparative Example 3

To demonstrate the effectiveness of carrying out the reaction in two separate stages rather than in one single stage,the same procedure of Example 2 was followed except that 938.2g Dowanol-PM and 989.3g dioxolane were added together with the reactants in a single stage.

The reaction medium including reactants, catalyst and solvents was initially at a temperature of 75 °C. The reaction proceeded as follows:

| Time (min) | Temp. (°C) | Conditions |
|---|---|---|
| 0 | 75 | catalyzed |
| 10 | 80 | cloudy |
| 30 | 85 | salt precipitate |
| 45 | 90 | salt precipitate |
| 120 | 90.6 | cloudy but nearing dissolution |
| 160 | 90 | totally clear |
| 360 | 90 | medium beginning to increase in viscosity |
| 390 | 90 | viscosity continuing to build |
| 450 | 90 | viscosity continuing to build |
| 540 | 89.5 | viscosity continuing to build |
| 585 | 89.5 | medium quenched |

Gel was observed on the vessel wall upon quenching of the reaction medium. The polymeric product was diluted to 25% solids with dioxolane to form a product having a viscosity of 1245 cp [25 °C measured with a #2 spindle at 6 r.p.m.

In Examples 2 and 3 of the invention, 360 and 310 minutes respectively were required to obtain the final polymeric product. When only one stage polymerization is employed, however, far larger reaction times, i.e., 585 minutes, were required. Such increased reaction times were probably the result of the longer periods which are required to dissolve the salt precipitate when all the dioxolane is present at time zero. The overall reaction time has been shown to be as in Example 3 if no more than circa half of the dioxolane is present at time zero with the remainder added as Stage II.

Comparative Example 4

When the process is run in two stages in Dowanol-PM and dioxolane but without reducing the amount

of branching agent from 17 to 12.75%, the extra process branching contribution is easily recognized.

Into a 2 liter reactor were charged the same materials as in Examples 1 and 2 but in reduced amounts, i.e., 204.2g of WC-69, 50.5g of CG-0510, 130.8g of sulfonyl diphenyl, 57.5g resorcinol and 12.02g p-tertiary butyl phenol. As catalyst was used 3.92g of 85% KOH and as quenching agent was used 6.0g HC1 (36% by wt.). The solvent system used was a two step system wherein 552.6 ml Dowanol-PM (577.6-25 for adjusting for HCl) were used in the first step and 500.8 ml dioxolane were added in the second step.

The starting materials, including the catalyst and the Dowanol-PM, were combined into a 2 liter reactor. The reaction proceeded as follows:

| Time (min) | Temp.(°C) | Conditions |
|---|---|---|
| 0 | 75 | catalyzed |
| 10 | 100 | reaction proceeding |
| 70 | 105 | medium becoming hazy, viscosity increasing, Dioxolane slowly added |
| 85 | 78 | cooled due to dioxolane |
| 180 | 90 | hazy medium |
| 360 | 90 | medium cooled |

The resulting polymeric product was very viscous at room temperature. Additionally, there had been gelling on the flask walls which could not be dissolved, even in Methyl Cellosolve. Thus, by carrying out the process in two stages and by reducing the amount of branching agent in the system, it is possible to eliminate Methyl Cellosolve as a solvent.

In making a usable vesicular film, the resin vehicle containing the vesiculating agent and other ingredients which may be included is coated on a suitable support. The various materials known in the art for this purpose are contemplated. The most common materials are the polyester films known by the trademarks MYLAR , ESTAR , CELANAR , LUMIRROR , HOSTAPHAN , etc.

In addition to the foregoing ingredients, other additives and treatments known in the art may be used as desired for the beneficial effects provided by them. For example, the hot fluid treatment described in U.S. Patent No. 3,149,971 can be used in making a vesicular film in accordance with the present invention if desired.

Although only preferred embodiments are specifically illustrated and described herein, it will be appreciated that many modifications and variations of the present invention are possible in light of the above teachings and within the purview of the appended claims without departing from the spirit and intended scope of the invention.

## Claims

1. A Methyl Cellosolve-free process branched phenoxy resin suitable for vesicular imaging which is coatable, highly branched, ungelled, non-linear, branched at hydroxy groups derived from a difunctional epoxide and having a molar ratio of monomeric units derived from difunctional epoxide: monomeric units derived from dihydric phenols of greater than or equal to 1.

2. A Methyl Cellosolve-free hybrid process branched/chemically branched phenoxy resin suitable for vesicular imaging which is highly coatable, highly branched, ungelled, non-linear and branched at (1) hydroxy groups derived from a difunctional epoxide and (2) epoxide or hydroxy functional groups derived from a branching agent having three or more functional groups.

3. The Methyl Cellosolve-free hybrid process branched/chemically branched phenoxy resin of Claim 2 further including an endblocker compound.

4. A Methyl Cellosolve-free process branched phenoxy resin suitable for vesicular imaging comprising a copolymer of the formula:

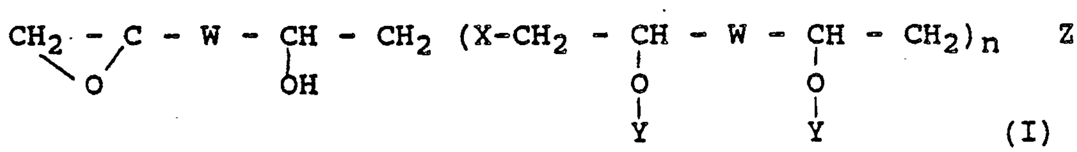
(I)

wherein:

$-CH_2-\underset{\mathrm{O}}{\underset{|}{C}}H-W-\underset{\mathrm{O}}{\underset{|}{C}}H-CH_2-$

is the residue of an epoxy comonomer having two epoxy functional groups;

-X- is the residue of a dihydric phenol;

-Y is hydrogen or a phenoxy unit of the formula (I); -Z is a terminal dihydric phenol or a dihydric phenol bonded to a terminal epoxy monomer; and

n is a number such that the resin has a molecular weight rendering it suitable for vesicular imaging.

5. A process for producing a process branched vesicular phenoxy resin comprising the steps of:

(i) dissolving a dihydric phenol, an epoxy comonomer having two epoxy functional groups and a catalyst in a solvent which;

(A) is capable of dissolving the polymer;

(B) is chemically compatible with the catalyst;

(C) is less reactive with said epoxy functional groups than hydroxyl moieties of the polymer;

the ratio of said epoxy comonomer to said dihydric phenol being greater than or equal to 1;

(ii) polymerizing the dihydric phenol and the epoxy comonomer having two epoxy functional groups until the polymer builds up a viscosity corresponding to a rheology suitable for coating.

6. The process of Claim 5 wherein the polymerizing step (ii) is continued until the polymer has a molecular weight between about 10,000 and 2,000,000.

7. The process of Claim 6 wherein the polymerizing step (ii) is continued until the polymer has a molecular weight between about 20,000 and 1,000,000.

8. The process of Claim 4 further including and endblocker which is dissolved in the solvent and reacted with the dihydric phenol and the epoxy comonomer in the solvent.

9. The process of Claim 5 wherein said solvent comprises a secondary or tertiary alcohol.

10. The process of Claim 9 wherein the solvent comprises Dowanol-PM.

11. The process of Claim 10 wherein the solvent is a mixture of Dowanol-PM and dioxolane or dioxane.

12. The process of Claim 6 wherein the polymerizing step (ii) further includes the steps of:

(I) polymerizing the dihydric phenol and the epoxy comonomer having two epoxy functional groups in the solvent at a 30% solids content until the polymer structure builds up;

(II) adding additional solvent to cut the solids content to 25% and continuing the polymerization until the polymer achieves a molecular weight suitable for a vesicular film.

13. A process for producing a Methyl Cellosolve-free hybrid process branched/chemically branched phenoxy resin suitable for vesicular imaging comprising the steps of:

(i) dissolving a dihydric phenol, an epoxy comonomer having two epoxy functional groups, a trifunctional branching agent, an endblocker, and a catalyst in a solvent which

(A) is capable of dissolving the polymer;

(B) is chemically compatible with the catalyst;

(C) is less reactive with said epoxy functional groups than hydroxyl moieties of the polymer; and

(ii) polymerizing the dihydric phenol, epoxy comonomer, and tri-functional branching agent until the polymer builds up a viscosity corresponding to a rheology suitable for coating.